# EUROPÄISCHE PATENTSCHRIFT

(11) **EP 2 483 990 B1**
(45) Veröffentlichungstag und Bekanntmachung des Hinweises auf die Patenterteilung: **30.03.2016**
(21) Anmeldenummer: 10770707.7
(22) Anmeldetag: 30.09.2010
(51) Int. Cl.: H04B 3/54, H02M 5/293

(54) **VORRICHTUNG ZUM MODIFIZIEREN EINER WECHSELSPANNUNG, WECHSELSPANNUNG MIT ÜBERLAGERTEM DATENSIGNAL, VERFAHREN ZUR DATENÜBERTRAGUNG, VERWENDUNG EINES EMPFÄNGERS, SOWIE KOMMUNIKATIONSARCHITEKTUR**
APPARATUS FOR MODIFYING AN ALTERNATING VOLTAGE, ALTERNATING VOLTAGE WITH SUPERIMPOSED DATA SIGNAL, METHOD FOR DATA TRANSMISSION, USE OF A RECEIVER AND COMMUNICATION ARCHITECTURE
APPAREIL POUR MODIFIER UNE TENSION ALTERNATIVE, TENSION ALTERNATIVE AVEC SIGNAL DE DONNÉES SUPERPOSÉ, MÉTHODE POUR LA TRANSMISSION DE DONNÉES, UTILISATION D'UN RÉCEPTEUR ET ARCHITECTURE DE COMMUNICATION

(30) Priorität: 30.09.2009 DE 202009013154 U; 30.09.2009 DE 202009013152 U; 09.04.2010 EP 10159540; 12.04.2010 DE 202010004850 U; 21.04.2010 DE 202010005953 U
(43) Veröffentlichungstag der Anmeldung: 08.08.2012
(73) Patentinhaber: Aizo group ag, 8952 Schlieren (CH)
(72) Erfinder: KEMMLER, Wolfgang, CH-8952 Schlieren (CH); TRAMM, Matthias, CH-8489 Wildberg (CH); BRÖCKMANN, Eckhard, 35418 Buseck (DE); TROLLHAGEN, Daniel, 35576 Wetzlar (DE); BECK, Wilfried, 65193 Wiesbaden (DE)
(74) Vertreter: Hepp Wenger Ryffel AG
(86) Internationale Anmeldenummer: PCT/EP2010/005965
(87) Internationale Veröffentlichungsnummer: WO 2011/038912

(56) Entgegenhaltungen:
- WO-A1-02/21664
- WO-A1-2007/045946
- DE-A1- 2 264 025

## Beschreibung

Die vorliegende Erfindung betrifft eine Vorrichtung zum Modifizieren einer Wechselspannung, eine Wechselspannung mit überlagertem Datensignal, ein Verfahren zur Datenübertragung, die Verwendung eines Empfängers, sowie eine Kommunikationsarchitektur.

Aus dem Stand der Technik sind verschiedene Vorrichtungen und Verfahren zur Modifizierung einer Wechselspannung bekannt. Beispielsweise wird bei der Powerline-Communication (PLC) der Wechselspannung in einem Gebäudestromnetz ein hochfrequentes Signal überlagert, mit dessen Hilfe Daten übertragen werden können. Ein solches Verfahren hat jedoch den Nachteil, dass die jeweiligen Stromkreise aufgrund der verwendeten Hochfrequenz wie Antennen wirken und die auf diese Weise übertragenen Daten in einem anderen Stromkreis sichtbar sind.

In US20040037221 wird vorgeschlagen, die Sinuswelle der Stromversorgung so zu modifizieren, dass die Halbwellen der Wechselspannungsversorgung ganz oder zur Hälfte abgeschnitten werden, um so ein Datensignal der Wechselspannung aufzuprägen. Aufgrund des massiven Eingriffs in die Spannungsversorgung können am Netz angeschlossene Geräte jedoch nicht mehr ordnungsgemäss betrieben werden. Eine Glühbirne beispielsweise zeigt die Netzstörungen durch ein Flackern an.

Aus EP1134910A2 ist ein Verfahren bekannt, das über verschieden lange Nullschaltungen oder Austastungen der Versorgungsspannungen verschiedene Bit-Arten definiert und es dem Empfänger mit einer einfachen Schaltung ermöglicht, die Bit-Arten zu detektieren und die jeweiligen Steuerinformationen auszuwerten. Bei diesem Datenübertragungsverfahren ist es technisch möglich, Informationen an mehrere, an eine gemeinsame Wechselspannungsversorgung angeschlossene Verbraucher zu übertragen, indem um den Nulldurchgang der Spannung eine Leitungsunterbrechung bzw. Austastung erfolgt. Systembedingt dürfen die Verbraucher hierbei jedoch keine induktiven oder kapazitiven Lastanteile besitzen, da diese die beschriebene Spannungsaustastung im Nulldurchgang der Spannungskurve stören würden.

EP 1675274 B1 zeigt, dass mittels eines Schalters der Stromfluss von einer Quelle zu einer Last unterbrochen wird und dass Blindleistungen der Last durch einen elektrischen niederohmigen Widerstand abgeleitet werden. Zur Datenübertragung wird eine Verringerung der Wirkleistung in das Wechselspannungsnetz eingeprägt. Nachteilig an einer solchen Vorrichtung ist insbesondere die hohe Belastung des Netzes beim Ausschalten, was sich in einer schlechten EMV niederschlägt.

WO 2007/045946 A1 zeigt ein Verfahren, eine Vorrichtung sowie ein System zur Datenübertragung von einem Smart-Adapter zu einem Hausgerät über die herkömmliche Stromversorgungsleitung. Dabei wird die Spannung auf der Stromversorgungsleitung moduliert durch eine Z-Diode, welche zwischen Eingang und Ausgang überbrückbar angeordnet ist. Bei nicht überbrückter Z-diode wird theoretisch die Sinus-Spannung der Stromversorgungsleitung um den Spannungswert der Z-Diode reduziert. Im realen Fall bei kapazitiver und/oder induktiver Belastung ist der Spannungsabfall jedoch nicht vorhersehbar.

DE 2 264 025 A1 zeigt eine Alarmvorrichtung, welche ein Alarmsignal über herkömmliche Spannungsversorgungsleitungen überträgt. Hierzu wird vom Sender dem Wechselspannungssignal eine Impulsfrequenz überlagert, so dass das Wechselspannungssignal moduliert wird. Diese Modulation kann die Spannungskurve auf der Wechselspannungsleitung nur theoretisch entsprechende einer gewünschten Pulsform modifizieren. Im realen Fall bei kapazitiver und/oder induktiver Belastung ist dies nicht mehr möglich.

Es ist Aufgabe der Erfindung, die Nachteile des Standes der Technik zu überwinden. Insbesondere soll eine Vorrichtung zum Modifizieren einer Wechselspannung, eine Wechselspannung mit überlagertem Datensignal und ein Verfahren zur Datenübertragung in einem Wechselspannungsnetzwerk zur Verfügung gestellt werden, welches sich insbesondere durch eine optimale elektromagnetische Verträglichkeit (EMV) kennzeichnet.

Diese Aufgabe wird durch die im unabhängigen Patentanspruch 1 definierte Vorrichtung, durch die im unabhängigen Patentanspruch 8 definierte Wechselspannung, sowie durch das im unabhängigen Patentanspruch 14 definierte Verfahren zur Datenübertragung gelöst. Weitere Ausführungsformen ergeben sich aus den abhängigen Patentansprüchen.

Hier und im Folgenden wird unter einem Wechselspannungsnetz ein elektrisches Netzwerk verstanden, welches innerhalb einer abgeschlossenen Einheit, beispielsweise innerhalb eines Hauses, einer Wohnung, eines Gebäudes, eines Fahrzeuges, eines Eisenbahnzuges, eines Schiffes, eines Flugzeugs, usw., die Energieversorgung unterschiedlicher Geräte mittels einer drahtgebundenen Wechselspannung sicherstellt. Entsprechend wird unter einer Wechselspannungsquelle ein Generator, eine Trafostation, eine Umspannstation, ein Wechselrichter einer Photovoltaikanlage, usw. verstanden.

Eine erfindungsgemässe Vorrichtung zum Modifizieren einer Wechselspannung verfügt über einen Eingang zum Verbinden mit einer Wechselspannungsquelle und einen Ausgang zum Verbinden mit einem Lastkreis. Die Vorrichtung weist ausserdem einen Unterbrecher auf. Dieser Unterbrecher ist so ausgestaltet, dass dieser innerhalb mindestens eines Zeitfensters den Ausgang kontrolliert von der Wechselspannungsquelle mindestens teilweise trennt. Unter einer teilweisen Trennung wird hierbei verstanden, dass mindestens eine hochohmige Last zwischen Eingang und Ausgang der Vorrichtung eingebracht wird. Es kann also noch immer ein kleiner Stromanteil fliessen. Es ist jedoch auch denkbar, dass der Unterbrecher den Leiter L komplett trennt. Das Zeitfenster weist einen definierten oder einen definierbaren zeitlichen Abstand vom Nulldurchgang der Spannung der Wechselspannungsquelle auf. Dabei kann es sich um ein einziges oder mehrere Zeitfenster handeln, welche sich über die Zeitdauer einer Sinuswelle verteilen. Das Zeitfenster oder die Zeitfenster können auf der positiven, auf der negativen oder auf beiden Halbwellen der Sinuswelle angeordnet sein.

Wenn die Vorrichtung zur Übertragung von Datensignalen über das Wechselspannungsnetz verwendet wird, kann beispielsweise der Nulldurchgang der Wechselspannung zur Synchronisation des Zeitfensters der Vorrichtung mit einem Empfangsfenster eines entsprechend ausgestalteten Empfängers verwendet werden. Somit kann auf eine komplizierte Erkennung des Anfangs eines Signals bzw. eines Bits verzichtet werden, ohne dass die Störsicherheit des Systems beeinträchtigt wird. Dem Empfänger ist genau bekannt, wann ein Signal zu erwarten ist. Insbesondere können über einen Timer bestimmte Sendefenster und Empfangsfenster definiert werden. Mit dem Nulldurchgang der Netzspannung steht also ein Mittel zur Verfügung, welches eine genaue Synchronisation von Sender und Empfänger erlaubt.

Die Vorrichtung weist weiter am Ausgang einen Terminator auf. Dieser Terminator ist insbesondere gemeinsam mit dem Unterbrecher so ausgestaltet ist, dass im Zeitfenster die Spannung am Ausgang der Vorrichtung einen vordefinierten oder vordefinierbaren Wert aufweist. Dadurch, dass der Lastkreis im Normalfall nicht nur rein ohmsche Lasten aufweist, sondern meist auch kapazitiv belastet ist, wird das Abfallen der Spannungskurve am Ausgang der Vorrichtung beim Trennen von der Wechselspannungsquelle undefiniert erfolgen. Es ist somit nur durch einen kontrollierten Terminator möglich, eine definierte Modifikation der Wechselspannung am Ausgang der Vorrichtung zu erreichen und eventuell vorhandene Störimpulse aus der Last, beispielsweise induktive Spitzen von Motoren, effektiv zu unterdrücken.

Weiterhin weist die Vorrichtung einen Pulsformgenerator auf, welcher eine vorbestimmte oder vorbestimmbare Pulsform erzeugt. Dabei kann ein einzelner Puls mit bestimmter Pulsform oder auch mehrere Pulse mit einer oder verschiedenen Pulsformen erzeugt werden. Die einzelne Pulsform kann dabei rechteckig, trapezförmig, gaussförmig oder sin²-förmig sein. Selbstverständlich sind auch andere Pulsformen oder Kombinationen davon denkbar.

Ausserdem weist die Vorrichtung Kontrollmittel auf, welche den Terminator und den Unterbrecher so ansteuern, dass die Spannungskurve am Ausgang der Vorrichtung entsprechend der durch den Pulsformgenerator vorgegebenen Pulsform modifizierbar ist. Hierbei ist vor allem die Flanke der Spannungskurve entsprechend der Pulsform zu modifizieren. Um eine möglichst geringe Belastung des Wechselspannungsnetzes mit hochfrequenten elektromagnetischen Störungen zu erreichen, wird vorteilhaft diejenige Pulsform ausgewählt, welche möglichst geringe hochfrequente Störungen auf dem Wechselspannungsnetz verursacht. Es hat sich gezeigt, dass dabei eine sin²-förmige oder gaussförmige Pulsform die beste Verträglichkeit gewährleistet. Die Modifikation der Wechselspannung ist dabei nicht rein von der Pulsform vorgegeben, es sind auch andere Faktoren wie beispielsweise die Grösse der Abweichung zu berücksichtigen.

Vorzugsweise werden sowohl der Terminator als auch der Unterbrecher durch einen Leistungstransistor gebildet, welcher neben einer reinen Schaltfunktion ein/aus auch gezielt angesteuert werden kann, so dass die gewünschten Pulsformen abgebildet werden können. Es ist aber auch denkbar, dass hierzu andere Schaltungselemente verwendet werden.

Bei der Wechselspannungsquelle handelt es sich im Normalfall um das örtliche Wechselspannungsnetz, wie es an die Hausinstallation in einem Verteiler angeschlossen wird. Üblicherweise wird der Eingang der Vorrichtung direkt hinter dem Sicherungsautomaten eines Strom- oder Lastkreises angeschlossen und der Ausgang dann mit dem Strom- oder Lastkreis verbunden. Die Vorrichtung kann jedoch auch an anderer Stelle in den Stromkreis eingebracht werden. Es versteht sich von selbst, dass die Vorrichtung neben der in Europa üblichen 220/240V - 50Hz auch für Wechselspannungsnetze mit 110/120V - 60Hz und beliebige Kombinationen davon ausgelegt werden kann. Wechselspannungsnetze mit anderen Spannungen, sowie Wechselspannungsnetze mit Netzfrequenzen abweichend von den üblichen 50/60Hz sind ebenfalls denkbar.

Das Zeitfenster kann einen Bereich von 10µs bis 300µs, vorzugsweise von 20µs bis 200µs, besonders bevorzugt von 25µs bis 100µs aufweisen. Dadurch, dass das Zeitfenster nicht allzu gross gewählt wird, kann sichergestellt werden, dass nur ein geringer Anteil an Leistung auf dem Wechselspannungsnetz für die Datenübertragung verwendet wird und somit nicht für die Energieübertragung zur Verfügung steht. Es ist aber auch möglich, die Zeitfenster grösser zu wählen.

Der zeitliche Abstand des Zeitfensters vom Nulldurchgang kann von 0µs bis 10'000µs, vorzugsweise 100µs bis 5'000µs, besonders bevorzugt 200µs bis 1'000µs betragen. Dabei kann das Zeitfenster auf der positiven Sinuswelle oder aber auch auf der negativen Sinuswelle angeordnet sein. Entsprechend kann der eine, der andere oder beide Nulldurchgänge zur Bestimmung des zeitlichen Abstandes benutzt werden. Insbesondere bei einem zeitlichen Abstand von Null, also im Nulldurchgang, kann keine Modulation erfolgen. Wenn der zeitliche Abstand vom Nulldurchgang nicht Null beträgt, kann die Modifikation der Wechselspannung deutlicher, d.h. einfacher erkennbar erfolgen. So steigt in einem ersten Abschnitt die Wechselspannung wie gewohnt an, bevor sie dann durch den Unterbrecher und den Terminator auf einen bestimmten Wert modifiziert wird. Es entsteht also eine definierte Flanke beim Beginn des Zeitfensters. Ebenso kann bei geeignetem Abstand vom Nulldurchgang eine steigende Flanke erhalten werden, wenn sich das Ende des Zeitfensters auf der fallenden Flanke der Sinuswelle befindet. Durch Wiedereinschalten des Unterbrechers wird sowohl in der steigenden Flanke als auch in der fallenden Flanke der Sinuswelle eine positive Pulsflanke erzeugt.

Der Wert der Spannung kann im Zeitfenster in etwa konstant sein. Dabei wird unter konstant verstanden, dass die Kurve innerhalb eines Bereiches von 5% bis 95% des Zeitfensters, insbesondere eine gemittelte Kurve im Falle eines überlagerten Wechselsignals, weniger als 20%, vorzugsweise weniger als 10%, besonders bevorzugt weniger als 5% von einem Startwert zum Zeitpunkt des Anfangs des Zeitfensters abweicht. Dabei kann dieser Startwert auf Null oder auf einem anderen Spannungswert liegen.

Alternativ kann aber auch die Abweichung der Spannung im Zeitfenster vom theoretischen Wert der am Eingang der Vorrichtung anliegenden Wechselspannung in etwa konstant sein. In diesem Falle wird unter in etwa konstant verstanden, dass die Steigung der Kurve innerhalb eines Bereiches von 5% bis 95% des Zeitfensters, insbesondere eine gemittelte Kurve im Falle eines überlagerten Wechselsignals, weniger als 20%, vorzugsweise weniger als 10%, besonders bevorzugt weniger als 5% von der Steigung der theoretischen Sinuskurve der Wechselspannung abweicht.

Es ist zu beachten, dass die beiden Flanken einer Hüllkurve der Abweichung zeitlich voneinander getrennt sind. So soll die Hüllkurve der Abweichung angenähert einem Trapez entsprechen, mit Basis auf der theoretischen Sinuskurve. Zu vermeiden ist ein allzu kurzes Zeitfenster, bei welchem sich die beiden Flanken berühren.

Die Vorrichtung kann am Ausgang einen Booster aufweist, welcher so ausgestaltet ist, dass beim Freigeben des Ausgangs durch den Unterbrecher die Spannungskurve am Ausgang der Vorrichtung zusätzlich unterstützt, bzw. angehoben wird und dadurch die Spannungskurve einen Puls entsprechend der durch den Pulsformgenerator vorgegebenen Pulsform aufweist. Unter einem Booster wird eine Schaltung verstanden, welche bei Bedarf die lastseitige Spannung auf einen gegenüber Masse gehobenen Spannungspegel ziehen kann, alternativ wird eine solche Schaltung auch als Pull-Up-Schaltung bezeichnet. Vor allem bei sehr hoher kapazitiver Last im Lastkreis und bei Ausfall der Sinus-Spannung, beispielsweise beim Rundsteuern, wird dafür gesorgt, dass die Steilheit der positiven Flanke der lastseitigen Wechselspannungsmodulation reproduzierbar bleibt.

Auf Grund von Rundsteuerverfahren in Versorgungsnetzen ist die Wechselspannungsnetz-Sinuswelle zu bestimmten Tageszeiten für eine gewisse Zeit, welche bis zu einigen Minuten dauern kann, mit einer Tonfrequenz überlagert. Dies führt zu einem signifikanten Jitter des Nulldurchgangs der quellseitigen Wechselspannungswelle und damit zu einem nicht mehr eindeutig vorhersehbaren Zeitpunkt für die Erzeugung der Wechselspannungsmodulation, weil der Nulldurchgang der Sinuswelle auf Grund der Überlagerung mit einer Tonfrequenz früher eintritt als im normalen Fall. Somit ist es für einen Zeitpunkt der Unterbrechung nahe dem Nulldurchgang schwierig, den richtigen Zeitpunkt für die Modifikation der lastseitigen Wechselspannung auf der fallenden Sinuswelle zu bestimmen. Es können Fälle auftreten, bei denen die Netzspannung an der Quelle schon so niedrig ist, dass eine positive Flanke der Wechselspannungsmodulation nicht mehr dargestellt werden kann. Der Booster sorgt dafür, dass trotzdem auf der Lastseite eine erkennbare steigende Pulsflanke auf der Wechselspannung entsteht. Hierzu kann beispielsweise kontinuierlich von der Quelle eine ausreichend große Pufferkapazität aufgeladen. Diese Kapazität dient als Energie-Reservoir für den Booster.

Weiter kann die Vorrichtung am Eingang eine von der erzeugten Modifikation abhängige Ersatzlast aufweisen, welche so ausgestaltet ist, dass die Trennung des Ausgangs von der Wechselspannungsquelle, von dieser nicht wahrnehmbar ist. Eine solche Ersatzlast auf der Quellseite kompensiert die abrupten Stromänderungen, die durch das Trennen der Quelle vom Lastkreis mittels des Unterbrechers der Vorrichtung erzeugt werden und abhängig von der Höhe der Quellimpedanz zu Spannungsänderungen im Quellkreis führen können. Durch eine solche Ersatzlast ist die Modifikation der Wechselspannung auf der Quellseite nicht mehr sichtbar. Die Vorrichtung ist bezüglich der Wechselspannungsquelle rückwirkungsfrei. Ein Übersprechen in benachbarte Stromkreise ist damit vernachlässigbar. Ausserdem wird dadurch die Belastung der quellseitigen leitungsgebundenen hochfrequenten Störungen massiv reduziert.

Eine erfindungsgemässe Wechselspannung mit überlagertem Datensignal weist innerhalb mindestens eines Zeitfensters eine Abweichung von der angenäherten Sinuskurve der Spannung einer Wechselspannungsquelle auf. Dabei weist das Zeitfenster einen zeitlichen Abstand vom Nulldurchgang der Wechselspannung einer Wechselspannungsquelle auf. Das Datensignal ist in der Abweichung von der angenäherten Sinuskurve der Spannung einer Wechselspannungsquelle enthalten. Das Datensignal kann dabei auf verschiedene Art moduliert sein, beispielsweise durch Pulsweitenmodulation, Amplitudenmodulation, Modulation des zeitlichen Abstandes vom Nulldurchgang, Modulation des Pulsabstandes bei mehreren Pulse, Modulation der Pulsform und Pulslänge. Es versteht sich von selbst, dass auch andere Modulationsarten und/oder eine Kombination der Modulationsarten möglich sind. Der Wert der Spannung im Zeitfenster entspricht dabei einer vorgegebenen Pulsform. Ausserdem kann der Wert der Spannung im Zeitfenster in etwa konstant sein, wobei unter in etwa konstant dieselbe Definition wie oben schon erwähnt verstanden wird. Ebenfalls kann die Abweichung der Spannung im Zeitfenster von der angenäherten Sinuskurve der Spannung einer Wechselspannungsquelle in etwa konstant sein. Auch hier soll unter in etwa konstant die weiter oben erwähnte Definition verstanden werden.

Die Flanken der Abweichung von der angenäherten Sinuskurve der Wechselspannung können einer vorgegebenen oder vorgebbaren Pulsform entsprechen. Somit kann erreicht werden, dass beispielsweise die Wechselspannung mit überlagertem Datensignal bezüglich EMV optimiert ist. Es hat sich als vorteilhaft erwiesen, wenn die Flanken einer sin²-Kurve oder eine Gausskurve angenähert sind. Andere Flankenformen sind ebenfalls denkbar.

Das Zeitfenster kann einen Bereich von 10µs bis 300µs, vorzugsweise von 20µs bis 200µs, besonders bevorzugt von 25µs bis 100µs aufweisen. Dadurch, dass das Zeitfenster nicht allzu gross gewählt wird, kann sichergestellt werden, dass nur ein geringer Anteil an Leistung auf dem Wechselspannungsnetz für die Datenübertragung verwendet wird und somit nicht für die Energieübertragung zur Verfügung steht. Es ist aber auch möglich, die Zeitfenster grösser zu wählen. Dabei ist jedoch zu beachten, dass die Geräte im Lastkreis nicht gestört werden.

Der zeitliche Abstand des Zeitfensters vom Nulldurchgang kann von 0µs bis 10'000µs, vorzugsweise 100µs bis 5'000µs, besonders bevorzugt 200µs bis 1'000µs betragen. Dabei kann das Zeitfenster auf der positiven Sinuswelle oder aber auch auf der negativen Sinuswelle angeordnet sein. Entsprechend kann der eine, der andere oder beide Nulldurchgänge zur Bestimmung des zeitlichen Abstandes benutzt werden. Wenn der Zeitliche Abstand nicht Null beträgt, so kann die Modifikation der Wechselspannung deutlicher, d.h. einfacher erkennbar erfolgen. So steigt in einem ersten Abschnitt die Wechselspannung wie gewohnt an, bevor sie dann durch den Unterbrecher und den Terminator auf einen bestimmten Wert modifiziert wird. Es entsteht also eine definierte Flanke beim Beginn des Zeitfensters. Ebenso kann bei geeignetem Abstand vom Nulldurchgang eine steigende Flanke erhalten werden, wenn sich das Ende des Zeitfensters einen Abstand zum dem Nulldurchgang befindet.

In einem erfindungsgemässen Verfahren zur Datenübertragung von einem Sender zu einem Empfänger in einem Wechselspannungsnetz sind der Sender quellseitig vom Empfänger und der Empfänger lastseitig vom Sender angeordnet. Der Sender modifiziert die Wechselspannung einer Wechselspannungsquelle so, dass diese der vorab beschriebenen Wechselspannung mit überlagertem Datensignal entspricht.

In einer erfindungsgemässe Kommunikationsarchitektur zur Datenübertragung in einem Wechselspannungsnetz mit einer Stammleitung, einem Verteiler, mindestens zwei Lastkreisen mit einem oder mehreren Verbrauchern ist dem Lastkreis eine wie vorgängig definierte Vorrichtung zugeordnet. Ausserdem ist dem Verbraucher ein Empfänger zugeordnet, welcher ein auf der Wechselspannung überlagertes Datensignal empfängt und den Verbraucher entsprechend dem empfangenen Datensignal steuert. Ausserdem sind die Vorrichtungen der mindestens zwei Lastkreise miteinander über einen Datenbus zur Kommunikation untereinander und/oder mit einer optionalen zentralen Recheneinheit verbunden.

Ein weiterer Aspekt der Erfindung betrifft die Verwendung eines Empfängers zum Auslesen von Datensignalen aus einer vorstehend beschriebenen Wechselspannung.

Ein weiterer Aspekt der Erfindung betrifft die Verwendung eines Empfängers in einem elektrischen Gerät zur Ermöglichung eines Auslesens von Datensignalen aus einer vorstehend beschriebenen Wechselspannung. Dabei dienen die Datensignale unter anderem der Beeinflussung der Verwendung eines elektrischen Gerätes. Unter einer solchen Verwendung wird beispielsweise verstanden, dass in einem Dimmer, in einem Schalter, in einer Stereoanlage, in einem Rollladen, in einem Backofen, in einem Motor, usw. ein Empfänger integriert ist, welcher Datensignale, welche über das Leitungsnetz übertragen werden, aus der Wechselspannung auslesen, das Datensignal verarbeiten und das Gerät entsprechend dem Datensignal steuern, also Dimmen, ein- oder ausschalten, laut oder leiser stellen, öffnen oder schliessen oder die Temperatur auf einen vorgegebenen Wert einstellen kann.

Anhand von Figuren, welche lediglich Ausführungsbeispiele darstellen, wird die Erfindung im Folgenden näher erläutert. Es zeigen:
- Figur 1:: eine erfindungsgemässe Vorrichtung zum Modifizieren der Wechselspannung,
- Figur 2:: eine Booster-Schaltung,
- Figur 3:: einen Ausschnitt aus einer erfindungsgemässen modifizierten Wechselspannung,
- Figur 4:: eine beispielhafte Empfängerschaltung,
- Figur 5:: eine positive Halbwelle einer erfindungsgemäss modifizierten Wechselspannung,
- Figur 6:: eine erfindungsgemässe Kommunikationsarchitektur, und
- Figur 7:: ein Funktionsdiagramm einer erfindungsgemässen Vorrichtung.

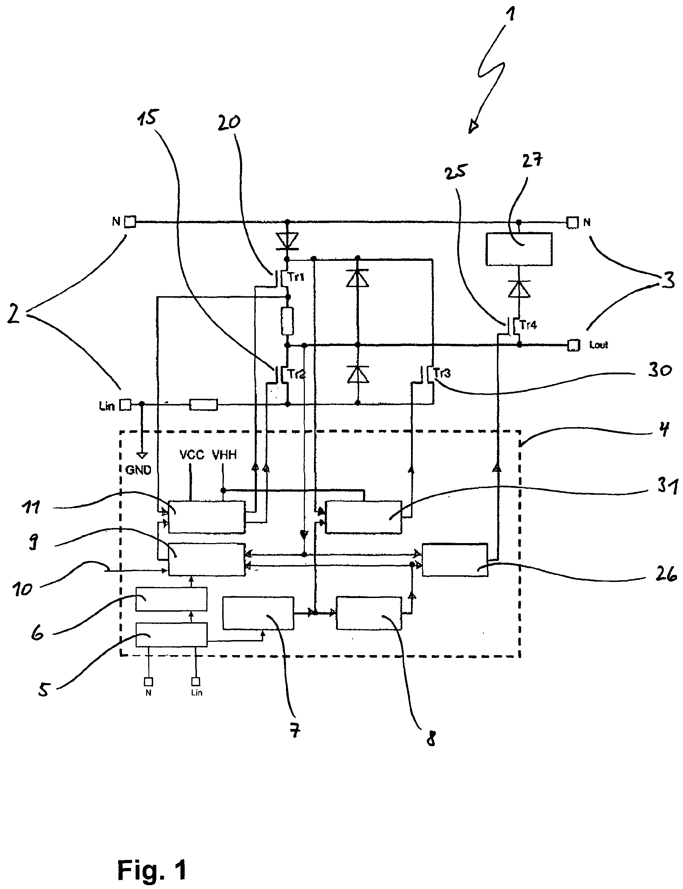

Figur 1 zeigt eine erfindungsgemässe Vorrichtung 1 zum Modifizieren einer Wechselspannung. Die Vorrichtung 1 verfügt über einen Eingang 2 und einen Ausgang 3. Die Vorrichtung 1 wird mit ihrem Eingang 2 an ein Wechselspannungsnetz angeschlossen. Am Ausgang 3 der Vorrichtung 1 kann ein Lastkreis angeschlossen werden. Ein solcher Lastkreis kann mehrere Verbraucher aufweisen. Auf dem Leiter L ist zwischen Eingang 2 und Ausgang 3 ein Unterbrecher 15 angeordnet. Dieser Unterbrecher 15 wird von einem Kontrollmittel 4 so angesteuert, dass der Leiter L zwischen Eingang 2 und Ausgang 3 im Bereich eines Zeitfensters unterbrochen wird. Dieses Zeitfenster wird innerhalb des Kontrollmittels 4 definiert von einem Sendefenstergeber 6 generiert. Die Last im Lastkreis, welcher am Ausgang 3 der Vorrichtung 1 angeschlossen werden kann, kann kapazitive Anteile aufweisen. Somit fällt beim Unterbrechen des Leiters L die Spannung am Ausgang 3 nicht wie gewünscht. Aus diesem Grund ist zwischen Neutralleiter N und Leiter Lout ausgangsseitig ein Terminator 20 vorgesehen. Dieser Terminator 20 wird vom Kontrollmittel 4 so angesteuert, dass er während des Zeitfensters den Neutralleiter N und den Leiter Lout ausgangsseitig kurzschliessen oder zumindest niederohmig belasten kann. Nach Ablauf des Zeitfensters wird die Unterbrechung des Leiters L zwischen Ein- und Ausgang vom Unterbrecher 15 wieder freigegeben. Gleichzeitig sperrt der Terminator 20 wieder bzw. wird hochohmig, so dass der Neutralleiter N vom Leiter Lout getrennt wird. Im idealen Fall steigt jetzt sofort die modifizierte Wechselspannung auf den Wert, welcher am Eingang 2 anliegt. Wenn aber durch hohe kapazitive Lasten oder durch einen hohen Innenwiderstand des Netzes auf der Seite des Lastkreises die Spannung am Ausgang 3 nicht schnell genug ansteigen kann und somit kein zuverlässig erkennbarer Puls in der Sinuswelle entsteht, kommt ein Booster 25 zum Einsatz. Solche Situationen können insbesondere während der netzseitigen Übertragung von Rundsteuersequenzen entstehen. Dadurch, dass auf die Wechselspannung die Rundsteuersequenz aufmoduliert ist, kann der Zeitpunkt des Nulldurchganges nicht immer eindeutig bestimmt werden. Es ist somit möglich, dass der Zeitpunkt der Wechselspannungsmodifikation der lastseitigen Wechselspannungskurve so weit in Richtung des Nulldurchgangs der abfallenden Sinusspannung verschoben wird, dass für eine steigende Flanke der Wechselspannungsmodifikation keine Spannung mehr vorliegt. Mit Hilfe des Boosters 25 wird eine solche steigende Flanke trotzdem generiert. Hierzu wird aus einem Booster-Spannungerzeuger 27, welcher eine Spannung von beispielsweise ca. -70V generiert, zusätzlich Strom aus der Last am Leiter Lout gezogen. Da beim Aktivieren des Boosters 25 der Unterbrecher 15 bereit vollständig leitend ist, übernimmt der Booster 25 auch die Funktion einen gewünschten Verlauf der Flanke am Leiter Lout zu erzeugen. Die Booster-Spannung wird direkt aus dem Netz gewonnen. Zwischen dem Nullleiter N und dem Leiter L ist zusätzlich eine Ersatzlast 30 angeordnet. Diese Ersatzlast 30 übernimmt während der Wechselspannungsmodifikation die Funktion einer Last für den Eingang 2. Somit kann von der Wechselspannungsquelle die Modifikation der Wechselspannung nicht erkannt werden.

Das Kontrollmittel 4 verfügt über einen Nulldurchgangsdetektor 5. Mittels dieses Nulldurchgangdetektors 5 und eines Sendefenstergebers 6 wird ein Impulsregler 9 angesteuert. Der Impulsregler 9 verfügt ausserdem über einen Dateneingang 10, um eine gewünschte Datensequenz zu übertragen. Über eine Pegelanpassung 11 werden sowohl der Unterbrecher 15 als auch der Terminator 20, welche beide beispielsweise als Transistor ausgebildet sind, gesteuert. Die Spannung, welche am Leiter Lout zum Zeitpunkt des Sendefensterendes anliegt, wird einem Hilfsstromregler 26 zurückgemeldet. Der Hilfsstromregler 26 steuert nun im Bedarfsfall den Booster 25 so, dass dieser den theoretischen Wert der angenäherten Sinus-Kurve nachbilden kann. Um eine solche Nachbildung zu ermöglichen, ist ein Prediktor 7 vorhanden. Der Prediktor 7 kann beispielsweise über eine Taylorreihenentwicklung den Sinusverlauf der Wechselspannungsquelle approximieren. Alternativ kann auch der Sinusverlauf über die Zeitdauer des Zeitfensters linear approximiert, also durch eine konstante Steigung angenähert werden. Der Ersatzlastregler 31 steuert die Ersatzlast 30 in Form eines Transistors so, dass netzseitig die Modifikation der Wechselspannung nicht wahrgenommen werden kann. Zur Sicherstellung einer möglichst geringen Belastung durch hochfrequente elektromagnetische Störungen sowohl eingangsseitig als auch ausgangsseitig der Vorrichtung 1 ist zusätzlich ein Pulsformgenerator 8 vorhanden, welcher sicherstellt, dass die Flanken der Modifikation entsprechend einer voreingestellten oder voreinstellbaren Pulsform verlaufen. Es hat sich gezeigt, dass eine gaussförmige oder sin²-förmige Pulsform bezüglich EMV gute Resultate zeigt.

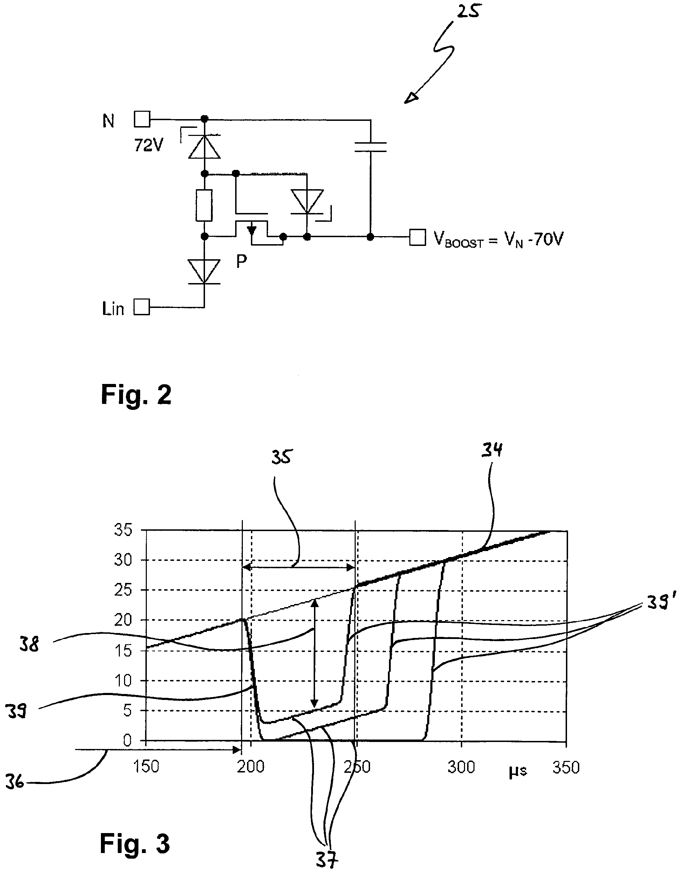

In Figur 2 ist eine Schaltung eines Boosters 25 dargestellt. Aus einer Boosterspannung, die bei ca. -70 V liegt, wird bei Bedarf zusätzlich Strom aus der Last am Leiter Lout gezogen. Da beim Aktivieren des Boosters 25 der Transistor des Unterbrechers bereits vollständig durchgesteuert ist, übernimmt der Transistor des Boosters 25 die Funktion, die Pulsform gemäss Pulsformregler am Leiter Lout zu erzeugen.

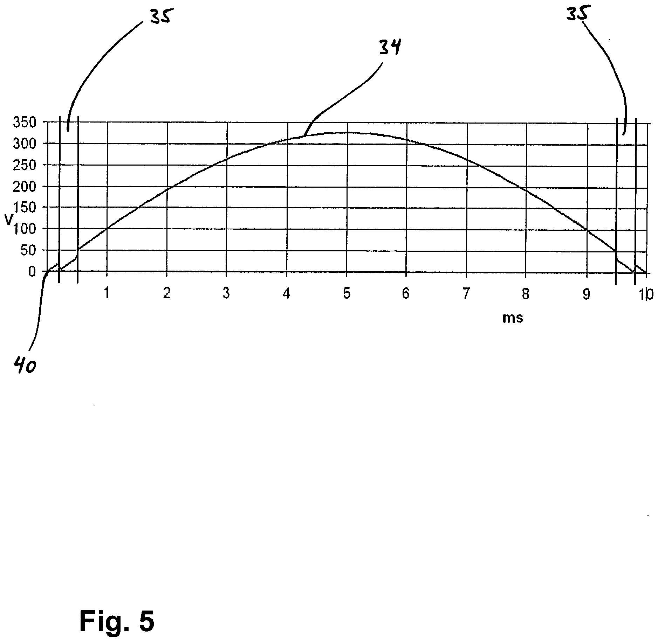

Figur 3 zeigt einen Ausschnitt aus einer erfindungsgemässen modifizierten Wechselspannung 34. Die Wechselspannung 34 weist in einem Zeitfenster 35 eine Abweichung 38 von der theoretischen Form einer Sinusspannung auf. Die Hüllkurve der Wechselspannung 34 im Bereich des Zeitfensters 35 ist in etwa trapezförmig. Dabei kann der Wert 37 der Wechselspannung 34 in etwa parallel zur theoretischen Sinuskurve verlaufen oder aber in einem bestimmten Bereich in etwa konstant sein. Das Zeitfenster 35 weist einen zeitlichen Abstand 36 vom Nulldurchgang 40 (siehe Figur 5) der Wechselspannung 34 auf. Die fallende Flanke 39 der modifizierten Wechselspannung 34 weist eine Form auf, welche durch den Pulsformgenerator vorgegeben wird. Es hat sich gezeigt, dass eine Pulsform angenähert an eine sin²-Kurve oder an eine Gaussform einen optimierten EMV-Wert ergibt. Entsprechend ist auch die steigende Flanke 39' nach Ablauf des Zeitfensters 35 geformt. In der Darstellung gemäss Figur 3 sind drei verschieden lange Zeitfenster 35 dargestellt. Zwei der modifizierten Wechselspannungen 34 weisen im Zeitfenster 35 einen Wert 37 auf, welcher in etwa parallel zur theoretischen Form der Sinuskurve verläuft. Eine modifizierte Wechselspannung 34, welche mit dem längsten Zeitfenster abgebildet ist, weist jedoch einen in etwa konstanten Wert 37 innerhalb des Zeitfensters auf.

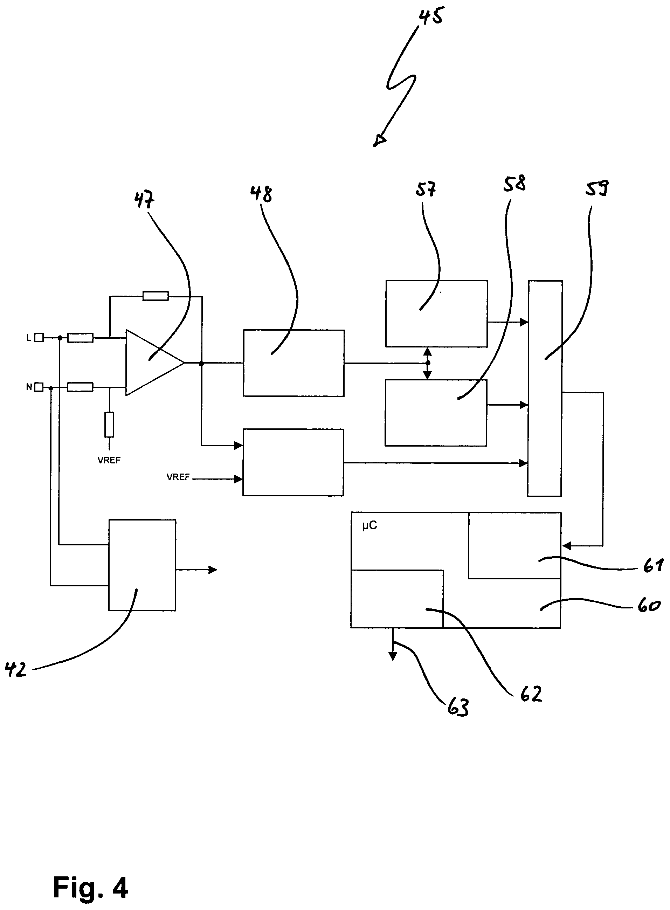

In Figur 4 ist eine Schaltung eines beispielhaften Empfängers 45 gezeigt, welcher lastseitig an eine erfindungsgemässe Vorrichtung angeschlossen werden kann. Der Empfänger 45 weist eingangsseitig zwei Leiter L und N auf, welche in üblicher Weise mit den Leitern L und N eines Wechselspannungsnetzes verbunden werden. Der Empfänger 45 verfügt über ein Netzteil 42, welcher die empfängerinterne Spannungsversorgung sicherstellt. Die beiden Leiter L und N werden auf einen Differenzverstärker 47 gegeben. Ausgehend vom am Differenzverstärker anliegenden Signal wird mit dem Nulldurchgangsdetektor 49 der Nulldurchgang der empfangenen Wechselspannung ermittelt. Das Signal des Differenzverstärkers 47 wird weiter einem Bandpass 48 zugeführt. Dieser Bandpass unterdrückt insbesondere alle Frequenzen unterhalb von 3 kHz. Somit werden die Netzfrequenz, welche üblicherweise 50/60 Hz beträgt, und alle eventuellen Rundsteuerfrequenzen zuverlässig unterdrückt. Ebenso werden niederfrequente Störungen von 0 bis 3 kHz unterdrückt. Die obere Frequenz des Bandpassfilters 48 wird so eingestellt, dass die zu erwartenden Datensignale klar detektierbar sind, jedoch hochfrequente Störungen unterdrückt werden. Erfahrungsgemäss liegt eine solche obere Frequenz im Bereich von ca. 90kHz, so dass insbesondere die im MHz-Bereich angesiedelten Trägerfrequenzen der bekannten Powerline Communication (PLC), wie beispielsweise Homeplug und DS2, effektiv unterdrückt werden. Ausgehend vom Signal des Bandpassfilters 48 wird mittels eines Schwellwertkomparators 57 und eines Extremwert-Triggers 58 zusammen mit dem ermittelten Nulldurchgang innerhalb einer digitalen Auswertung 59 eine Analyse des Spannungsabbilds nach Zeitpunkt, Schwelle und Extremwert vorgenommen. Das entsprechende Signal wird einem digitalen Eingang 61 eines Mikrokontrollers 60 zugeführt. Der Mikrokontroller 60 entscheidet über die Gültigkeit der im Empfangszeitfenster analysierten Pulse, dekodiert daraus die Dateninformation und steuert dann eine Leistungselektronik 62 so, dass ein am Ausgang 63 angeschlossenes Gerät entsprechend der empfangenen Dateninformation angesteuert wird.

Alternativ zur genannten analogen Analyse kann auch ein digitaler Korrelationsempfänger verwendet werden. Dabei vergleicht ein Korrelator im Empfangszeitfenster das Netzspannungsabbild mit einer dem Korrelator bekannten Pulsform des Sendeimpulses.

Eine weitere Möglichkeit ist dadurch gegeben, dass im Empfangszeitfenster ein digitaler Empfänger auf Basis einer digitalen Fourieranalyse verwendet wird. Dabei wird das Frequenzspektrum des Spannungsabbildes auf Übereinstimmung mit dem Spektrum des bekannten Sendeimpulses analysiert.

In Figur 5 ist eine erfindungsgemässe Wechselspannung 34 gezeigt, welche innerhalb von zwei Zeitfenstern 35 eine Modifikation in Form einer Abweichung aufweist. Die beiden Zeitfenster 35 sind um einen bestimmten zeitlichen Abstand vom Nulldurchgang 40 der Wechselspannung 34 angeordnet. Es ist auch denkbar, dass mehr als zwei Zeitfenster 35 auf einer Halbwelle der Wechselspannung angeordnet sind.

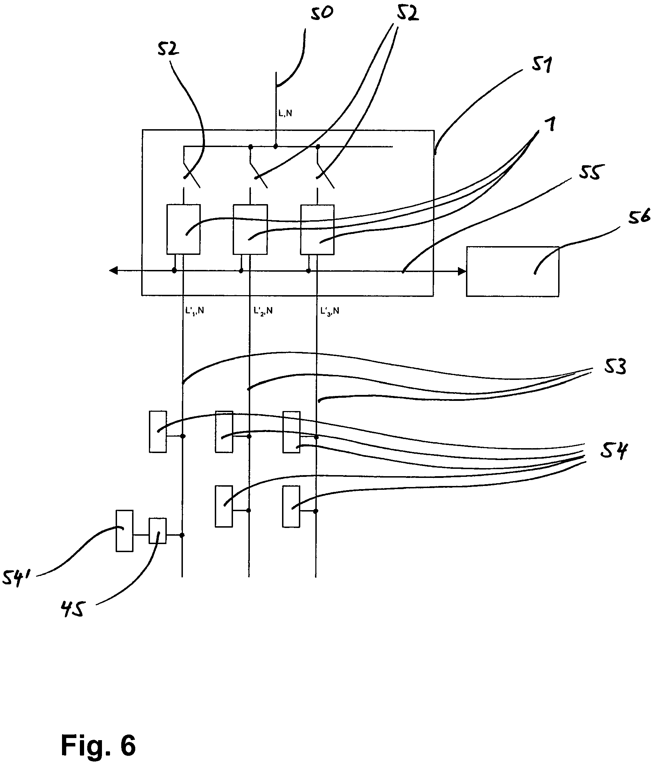

Figur 6 zeigt eine erfindungsgemässe Kommunikationsarchitektur zur Datenübertragung in einem Wechselspannungsnetz. Ausgehend von einer Stammleitung 50, welche einem Verteiler 51 zugeführt wird, wird das Wechselspannungsnetz in einzelne Lastkreise 53 aufgeteilt. Dabei verfügt jeder Lastkreis 53 direkt anschliessend an die Stammleitung 50 über einen separaten Sicherungsautomaten 52. Ein solcher Sicherungsautomat 52 gewährleistet, dass bei einer übermässigen Belastung eines Lastkreises 53, dieser von der Stammleitung 50 getrennt wird, bevor Schäden entstehen können. Anschliessend an den Sicherungsautomaten 52 ist eine Vorrichtung 1 angeordnet, welche die Wechselspannung im Lastkreis 53 modifiziert. Eine solche Vorrichtung 1 kann auch als Sender bezeichnet werden. Auf dem Lastkreis 53 sind ein oder mehrere Verbraucher 54 angeordnet. Die Verbraucher 54 sind nun in der Lage, das modifizierte Wechselspannungssignal, welches von der Vorrichtung 1 generiert wird, zu detektieren und das entsprechende Datensignal auszulesen und zu verarbeiten. Hierzu verfügt jeder Verbraucher 54 über eine integrierte Empfängerschaltung. Der Verbraucher 54' ist mit einem externen Empfänger 45 versehen. Der Verbraucher 54' ist beispielsweise eine herkömmliche Glühlampe. Dadurch, dass dieser Verbraucher 54' über einen Empfänger 45 an den Lastkreis 53 angeschlossen ist, kann über die Vorrichtung 1 beispielsweise eine konventionelle Glühlampe 54' ein- oder ausgeschaltet werden. Die Vorrichtungen 1 sind über einen Datenbus 55 miteinander verbunden. Zusätzlich ist eine zentrale Recheneinheit 56 gezeigt, welche ebenfalls über den Datenbus 55 mit den Vorrichtungen 1 in Verbindung steht. Somit wird es möglich, die Verbraucher 54 von der zentralen Recheneinheit 56 zu steuern. Eine solche Kommunikationsarchitektur ist insbesondere vorteilhaft, wenn jede Vorrichtung 1 nicht nur als Sender ausgebildet ist, sondern auch Mittel umfasst, welche ein Empfangen von Datensignalen erlaubt. Wenn zusätzlich die Empfänger 45 bzw. die integrierten Empfänger der Verbraucher 54 über eine Sendeeinheit verfügen, kann sogar eine bidirektionale Kommunikation zwischen Empfänger und Vorrichtung 1 bzw. zentraler Recheneinheit 56 erfolgen.

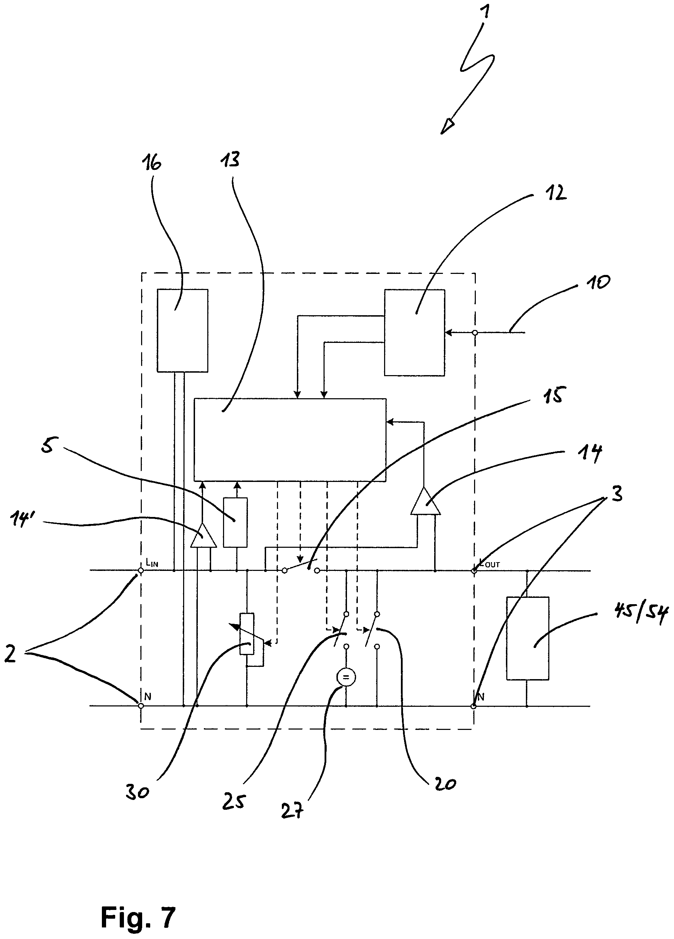

Figur 7 zeigt ein Funktionsdiagramm einer erfindungsgemässen Vorrichtung 1. Die Vorrichtung 1 verfügt über einen Eingang 2 zum Verbinden mit einer Wechselspannungsquelle. Am Ausgang 3 der Vorrichtung 1 ist ein elektrisches Gerät 54 mit einem Empfänger 45 dargestellt, welches direkt an die beiden Leiter N und Lout der Vorrichtung 1 angeschlossen ist. Auf dem Leiter L ist zwischen Eingang 2 und Ausgang 3 ein Unterbrecher 15 angeordnet, welcher den Leiter L zum gewünschten Zeitpunkt trennt. Der Unterbrecher wird von einem Regler 13 angesteuert. Zwischen Leiter L und Nullleiter N ist ein Terminator 20 angeordnet, welcher gleichzeitig mit dem Unterbrechen des Leiters L durch den Unterbrecher 15 ausgangsseitig den Leiter Lout und den Nullleiter N niederohmig verbindet. Somit wird sichergestellt, dass die Spannung am Ausgang 3 nach unten gezogen wird. Auch der Terminator 20 wird vom Regler 13 gesteuert. Zusätzlich ist zwischen dem Leiter L und dem Nulleiter N ein Booster 25 mit einer Boostspannungserzeugung 27, sowie eine Ersatzlast 30 angeordnet. Sowohl Booster 25 als auch Ersatzlast 30 werden vom Regler 13 angesteuert.

Der Booster 25 kommt dann zum Einsatz, wenn beispielsweise auf der fallenden Flanke der Wechselspannung der Unterbrecher 15 die beiden Leiter Lin und Lout wieder verbindet und der Terminator 20 wieder sperrt. Ist dann die anliegende Spannung am Eingang 2 nicht genügend hoch um eine gezieltes Ansteigen der Wechselspannung zu erreichen, beispielsweise bei verschobenem Nulldurchgang durch überlagertes Rundsteuersignal, wird der Booster 25 mit Hilfe des Boostspannungserzeugers 27 dem Leiter Lout einen Impuls aufzwingen. Somit kann am Empfänger 45 trotzdem das Ende des Unterbruchs detektiert werden.

Die Ersatzlast 30 simuliert während des Unterbruchs bzw. während der Modifikation der Wechselspannung die am Ausgang 3 anliegende Last, so dass das Wechselspannungsnetz eingangsseitig nicht unnötig belastet wird. Störungen ausgelöst durch abrupte Schaltvorgänge werden unterdrückt.

Der Regler 13 ist mit einem Nulldurchgangsdetektor 5 verbunden, so dass der Regler 13 den Unterbrecher 15, den Terminator 20, und gegebenenfalls den Booster 25 in Abhängigkeit vom Nulldurchgang der Wechselspannung steuern kann. Der Regler 13 verfügt auch über je einen Eingang der beiden Messverstärker 14, 14', welche den Istwert der Wechselspannung am Eingang 2 bzw. den Istwert der Spannungsdifferenz zwischen Leiter Lin am Eingang 2 und Leiter Lout am Ausgang 3 messen. Ausserdem verfügt der Regler 13 über einen Eingang von einem Kontroller 12, welcher den Puls und weitere Parameter beispielsweise zur Pulsform oder Pulsfolge übergibt. Der Kontroller 12 verfügt hierzu über einen Dateneingang 10, welcher beispielsweise mit einer zentralen Recheneinheit 56 (siehe Figur 6) verbunden sein kann.

## Patentansprüche

1. Vorrichtung (1) zum Modifizieren einer Wechselspannung,
wobei die Vorrichtung (1) über einen Eingang (2) zum Verbinden mit einer Wechselspannungsquelle und einen Ausgang (3) zum Verbinden mit einem Lastkreis verfügt,
wobei der Ausgang einen Neutralleiter (N) und einen Leiter (Lout) aufweist,
wobei die Vorrichtung (1) einen Unterbrecher (15) zwischen Eingang (2) und Ausgang (3) aufweist, welcher so ausgestaltet ist, dass innerhalb mindestens eines Zeitfensters (35) der Ausgang (3) von der Wechselspannungsquelle trennbar ist,
wobei das Zeitfenster (35) einen zeitlichen Abstand (36) vom Nulldurchgang (40) der Spannung der Wechselspannungsquelle aufweist,
wobei die Vorrichtung (1) am Ausgang (3) zwischen dem Neutralleiter (N) und dem Leiter (Lout) einen Terminator (20) aufweist, welcher den Neutralleiter (N) und den Leiter (Lout) ausgangsseitig kurzschliessen oder zumindest niederohmig belasten kann und welcher gemeinsam mit dem Unterbrecher (15) so ausgestaltet ist, dass im Zeitfenster (35) die Spannung am Ausgang (3) der Vorrichtung (1) einen vordefinierten oder vordefinierbaren Wert (37) aufweist,
**dadurch gekennzeichnet, dass** die Vorrichtung (1) einen Pulsformgenerator (8) zur Erzeugung einer vorbestimmten oder vorbestimmbaren Pulsform aufweist,
und dass die Vorrichtung (1) Kontrollmittel (4) aufweist, mittels welcher Terminator (20) und Unterbrecher (15) so ansteuerbar sind, dass die Spannungskurve am Ausgang (3) der Vorrichtung (1) entsprechend der durch den Pulsformgenerator (8) vorgegebenen Pulsform modifizierbar ist.

2. Vorrichtung (1) nach Anspruch 1, **dadurch gekennzeichnet, dass** das Zeitfenster (35) einen Bereich von 10µs bis 300µs, vorzugsweise von 20µs bis 200µs, besonders bevorzugt von 25µs bis 100µs aufweist.

3. Vorrichtung (1) nach Anspruch 1 oder 2, **dadurch gekennzeichnet, dass** der zeitliche Abstand (36) vom Nulldurchgang (40) von 0µs bis 10'000µs, vorzugsweise 100µs bis 5'000µs, besonders bevorzugt 200µs bis 1'000µs beträgt.

4. Vorrichtung (1) nach einem der Ansprüche 1 bis 3, **dadurch gekennzeichnet, dass** der Wert (37) der Spannung, insbesondere der gemittelte Wert im Falle eines überlagerten Wechselsignals, innerhalb eines Bereiches von 5% bis 95% des Zeitfenster (35) weniger als 20%, vorzugsweise weniger als 10%, besonders bevorzugt weniger als 5% von einem Startwert zum Zeitpunkt des Anfangs des Zeitfensters abweicht.

5. Vorrichtung nach einem der Ansprüche 1 bis 3, **dadurch gekennzeichnet, dass** die Abweichung (38) der Spannung im Zeitfenster (35) vom am Eingang (2) der Vorrichtung (1) anliegenden Wert der Wechselspannung derart ausgestaltet ist, dass die Steigung der Spannung, insbesondere eine gemittelte Kurve im Falle eines überlagerten Wechselsignals, innerhalb eines Bereiches von 5% bis 95% des Zeitfenster (35) weniger als 20%, vorzugsweise weniger als 10%, besonders bevorzugt weniger als 5% von der Steigung der theoretischen Sinuskurve der Wechselspannung innerhalb des Zeitfensters abweicht.

6. Vorrichtung (1) nach einem der Ansprüche 1 bis 5, **dadurch gekennzeichnet, dass** die Vorrichtung (1) am Ausgang (3) einen Booster (25) aufweist, welcher so ausgestaltet ist, dass beim Freigeben des Ausgangs (3) durch den Unterbrecher (15) die Spannungskurve am Ausgang (3) der Vorrichtung (1) zusätzlich unterstützt wird und dadurch die Spannungskurve einen Puls entsprechend der durch den Pulsformgenerator (8) vorgegebenen Pulsform aufweist.

7. Vorrichtung (1) nach einem der Ansprüche 1 bis 6, **dadurch gekennzeichnet, dass** die Vorrichtung (1) am Eingang (2) eine von der erzeugten Modifikation abhängige Ersatzlast (30) aufweist, welche so ausgestaltet ist, dass die Trennung des Ausgangs (3) von der Wechselspannungsquelle von dieser nicht wahrnehmbar ist.

8. Verfahren zum Übertragen von Datensignalen über ein Wechselspannungsnetz mit einer Vorrichtung (1) nach einem der Ansprüche 1 bis 7, wobei zur Synchronisation des Zeitfensters (35) der Vorrichtung (1) mit einem Empfangsfenster eines entsprechend ausgestalteten Empfängers der Nulldurchgang der Wechselspannung verwendet wird.

9. Kommunikationssystem zur Datenübertragung in einem Wechselspannungsnetz mit einer Stammleitung (50), einem Verteiler (51), mindestens zwei Lastkreisen (53) mit einem oder mehreren Verbrauchern (54)
wobei dem Lastkreis (53) eine Vorrichtung (1) gemäss einem der Ansprüche 1 bis 7 zugeordnet ist,
wobei dem Verbraucher (54) ein Empfänger (45) zugeordnet ist, welcher ein auf der Wechselspannung (34) überlagertes Datensignal empfängt und entsprechend den Verbraucher (54) steuert,
**dadurch gekennzeichnet, dass** die Vorrichtungen (1) miteinander über einen Datenbus (55) zur Kommunikation untereinander und/oder mit einer optionalen zentralen Recheneinheit (56) verbunden sind.

## Claims

1. Apparatus (1) for modifying an AC voltage,
wherein the apparatus (1) has an input (2) for connection to an AC voltage source and an output (3) for connection to a load circuit,
wherein the output has a neutral conductor (N) and a conductor (Lout),
wherein the apparatus (1) has an interrupter (15) between input (2) and output (3) which is designed such that within at least one time window (35) the output (3) can be isolated from the AC voltage source,
wherein the time window (35) is at an interval of time (36) from the zero crossing (40) of the voltage from the AC voltage source,
wherein the apparatus (1) has, at the output (3), between the neutral conductor (N) and the conductor (Lout), a terminator (20) which can short or at least place a low impedance load on the neutral conductor (N) and the conductor (Lout) on the output side and which is designed together with the interrupter (15) such that in the time window (35) the voltage at the output (3) of the apparatus (1) has a predefined or predefinable value (37),
**characterized in that** the apparatus (1) has a pulse shape generator (8) for generating a predetermined or predeterminable pulse shape,
and **in that** the apparatus (1) has control means (4) which can be used to actuate terminator (20) and interrupter (15), such that the voltage curve at the output (3) of the apparatus (1) can be modified in accordance with the pulse shape prescribed by the pulse shape generator (8).

2. Apparatus (1) according to Claim 1, **characterized in that** the time window (35) has a range from 10 µs to 300 µs, preferably from 20 µs to 200 µs, particularly preferably from 25 µs to 100 µs.

3. Apparatus (1) according to Claim 1 or 2, **characterized in that** the interval of time (36) from the zero crossing (40) is from 0 µs to 10 000 µs, preferably 100 µs to 5000 µs, particularly preferably 200 µs to 1000 µs.

4. Apparatus (1) according to one of Claims 1 to 3, **characterized in that** the value (37) of the voltage, particularly the averaged value in the case of a superimposed AC signal, within a range from 5% to 95% of the time window (35) deviates from a starting value at the instant of the start of the time window by less than 20%, preferably less than 10%, particularly preferably less than 5%.

5. Apparatus according to one of Claims 1 to 3, **characterized in that** the deviation (38) in the voltage in the time window (35) from the value of the AC voltage that is applied to the input (2) of the apparatus (1) is embodied such that the gradient of the voltage, particularly an averaged curve in the case of a superimposed AC signal, within a range from 5% to 95% of the time window (35) deviates from the gradient of the theoretical sine curve of the AC voltage within the time window by less than 20%, preferably less than 10%, particularly preferably less than 5%.

6. Apparatus (1) according to one of Claims 1 to 5, **characterized in that** the apparatus (1) has, at the output (3), a booster (25) which is designed such that when the output (3) is enabled by the interrupter (15) the voltage curve at the output (3) of the apparatus (1) is additionally supported and as a result the voltage curve has a pulse in accordance with the pulse shape prescribed by the pulse shape generator (8).

7. Apparatus (1) according to one of Claims 1 to 6, **characterized in that** the apparatus (1) has, at the input (2), a dummy load (30) which is dependent on the modification produced and which is designed such that the isolation of the output (3) from the AC voltage source cannot be perceived by the latter.

8. Method for transmitting data signals via an AC power supply system having an apparatus (1) according to one of Claims 1 to 7, wherein the zero crossing of the AC voltage is used for synchronizing the time window (35) of the apparatus (1) to a reception window of an appropriately designed receiver.

9. Communication system for data transmission in an AC power supply system having a trunk line (50), a distributor (51), at least two load circuits (53) with one or more loads (54),
wherein the load circuit (53) has an associated apparatus (1) according to one of Claims 1 to 7,
wherein the load (54) has an associated receiver (45) which receives a data signal superimposed on the AC voltage (34) and controls the load (54) accordingly,
**characterized in that** the apparatuses (1) are connected to one another via a data bus (55) for the purpose of communication with one another and/or to an optional central computation unit (56).

## Revendications

1. Dispositif (1) destiné à modifier une tension alternative, dans lequel le dispositif (1) comporte une entrée (2) destinée à être connectée à une source de tension alternative et une sortie (3) destinée à être connectée à un circuit de charge,
dans lequel la sortie comprend un conducteur neutre (N) et un conducteur (Lout),
et dans lequel le dispositif (1) comprend un coupe-circuit (15) entre l'entrée (2) et la sortie (3), qui est conçu de manière à pouvoir être séparé de la source de tension alternative à l'intérieur d'au moins une fenêtre temporelle (35) de la sortie (3),
dans lequel la fenêtre temporelle (35) présente un espacement temporel (36) par rapport au passage à zéro (40) de la tension de la source de tension alternative, dans lequel le dispositif (1) présente à la sortie (3), entre le conducteur neutre (N) et le conducteur (Lout), une terminaison (20) qui peut court-circuiter le conducteur neutre (N) et le conducteur (Lout) du côté de la sortie ou du moins le charger par une faible résistance et qui est conçu, en association avec le coupe-circuit (15), de manière à ce que la tension à la sortie (3) du dispositif (1), dans la fenêtre temporelle (35), présente une valeur (37) prédéfinie ou pouvant être définie,
**caractérisé en ce que** le dispositif (1) présente un générateur de forme d'impulsion (8) destiné à générer une forme d'impulsion prédéterminée ou pouvant être prédéterminée,
et **en ce que** le dispositif (1) présente des moyens de commande (4) au moyen desquels la terminaison (20) et le coupe-circuit (15) peuvent être commandés de manière à ce que la courbe de tension à la sortie (3) du dispositif (1) puisse être modifiée d'une manière qui correspond à la forme d'impulsion prédéterminée par le générateur de forme d'impulsion (8).

2. Dispositif (1) selon la revendication 1, **caractérisé en ce que** la fenêtre temporelle (35) présente un intervalle de 10 µs à 300 µs, préférablement, de 20 µs à 200 µs, et plus préférablement, de 25 µs à 100 µs.

3. Dispositif (1) selon la revendication 1 ou 2, **caractérisé en ce que** l'espacement temporel (36) par rapport à un passage à zéro (40) est de 0 µs à 10000 µs, préférablement, de 100 µs à 5000 µs, et plus préférablement, de 200 µs à 1000 µs.

4. Dispositif (1) selon l'une quelconque des revendications 1 à 3, **caractérisé en ce que** la valeur (37) de la tension, notamment de la tension moyennée dans le cas d'un signal alternatif superposé s'écarte, à l'intérieur d'un intervalle de 5 % à 95 % de la fenêtre temporelle (35), de moins de 20 %, préférablement, de moins de 10 %, et plus préférablement, de moins de 5 % d'une valeur de départ à l'instant du début de la fenêtre temporelle.

5. Dispositif selon l'une quelconque des revendications 1 à 3, **caractérisé en ce que** l'écart de la tension (38), dans la fenêtre temporelle (35), par rapport à la valeur de la tension alternative présente à l'entrée (2) du dispositif (1), est déterminé de manière à ce que la pente de la tension, notamment d'une courbe moyennée dans le cas d'un signal alternatif superposé, s'écarte, à l'intérieur d'un intervalle de 5 % à 95 % de la fenêtre temporelle (35), de moins de 20 %, préférablement, de moins de 10 %, plus préférablement, de moins de 5 % de la pente de la courbe sinusoïdale théorique de la tension alternative à l'intérieur de la fenêtre temporelle.

6. Dispositif (1) selon l'une quelconque des revendications 1 à 5, **caractérisé en ce que** le dispositif (1) présente à la sortie (3) un survolteur (25) qui est en outre conçu, lors du déblocage de la sortie (3) par le coupe-circuit (15), pour renforcer la courbe de tension à la sortie (3) du dispositif (1) et **en ce que** la courbe de tension comporte de ce fait une impulsion correspondant à la forme d'impulsion prédéterminée par le générateur de forme d'impulsion (8).

7. Dispositif (1) selon l'une quelconque des revendications 1 à 6, **caractérisé en ce que** le dispositif (1) présente à l'entrée (2) une charge fictive (30) dépendant de la modification générée, qui est conçue de manière à ce que la séparation de la sortie (3) de la source de tension alternative ne puisse pas être perçue par celle-ci.

8. Procédé de transmission de signaux de données par l'intermédiaire d'un réseau à tension alternative au moyen d'un dispositif (1) selon l'une quelconque des revendications 1 à 7, dans lequel, pour la synchronisation de la fenêtre temporelle (35) du dispositif (1) avec une fenêtre de réception d'un récepteur conçu de manière correspondante, le passage à zéro de la tension alternative est utilisé.

9. Système de communication destiné à la transmission de données dans un réseau à tension alternative comportant une ligne principale (50), un répartiteur (51), au moins deux circuits de charge (53) ayant un ou plusieurs dispositifs consommateurs (54), dans lequel le circuit de charge (53) est associé à un dispositif (1) selon l'une quelconque des revendications 1 à 7,
dans lequel un récepteur (45) qui reçoit un signal de données superposé à la tension alternative (34) et commande de manière correspondante le dispositif consommateur (54), est associé au dispositif consommateur (54),
**caractérisé en ce que** les dispositifs (1) sont reliés les uns aux autres par l'intermédiaire d'un bus de données (55) à des fins d'intercommunication et/ou à une unité centrale de traitement facultative (56).
